# EUROPÄISCHE PATENTANMELDUNG

(11) **EP 2 500 769 A2**
(43) Veröffentlichungstag der Anmeldung: **19.09.2012**
(21) Anmeldenummer: 12155716.9
(22) Anmeldetag: 19.11.2009
(51) Int. Cl.: G02F 1/163, E06B 9/24

(54) **Optisch aktive Verglasung mit Überspannungsschutz**

(30) Priorität: 20.12.2008 DE 102008064357
(62) Teilanmeldung aus: 09763906.6
(71) Anmelder: Saint-Gobain Glass France, 92400 Courbevoie (FR)
(72) Erfinder: Letocart, Philippe, 4730 Raeren (BE)
(74) Vertreter: Lendvai, Tomas

(57) **Zusammenfassung**

Die Erfindung betrifft einen Aufbau (1) mit einer optisch aktiven Verglasung (2), deren optische Eigenschaften durch Zuführen elektrischer Leistung veränderbar sind, einer elektrische Leistungsquelle (3), die über einen Stromkreis (4, 5, 6, 7), der ein an die Leistungsquelle (3) angeschlossenes erstes Leitungspaar (4, 5) enthält, mit der optisch aktiven Verglasung (2) elektrisch verbindbar ist, sowie einer im Stromkreis angeordneten Schaltungsanordnung, welche derart ausgebildet ist, dass sie unterhalb einer vorbestimmten Schwellspannung die Leistungsquelle (3) und die Verglasung (2) elektrisch verbindet und bei Erreichen der Schwellspannung die Leistungsquelle (3) von der Verglasung (2) elektrisch trennt.

## Beschreibung

Die Erfindung liegt auf dem technischen Gebiet der optisch aktiven Verglasugen, bei denen optische Eigenschaften durch Zuführen elektrischer Leistung veränderbar sind, und betrifft nach ihrer Gattung einen Aufbau, in dem eine solche optisch aktive Verglasung über einen Stromkreis an eine Leistungsquelle angeschlossen ist.

In Gebäuden und Fahrzeugen werden zunehmend optisch aktive Verglasungen eingesetzt, bei denen optische Eigenschaften durch Zuführen elektrischer Leistung gezielt veränderbar sind, um beispielsweise durch eine unterschiedliche optische Durchlässigkeit (Transparenz) der Verglasung die Menge einfallenden Lichts stufenlos zu regeln.

Gattungsgemäße Verglasungen sind als solche wohlbekannt und bereits in vielfältiger Weise in der Patentliteratur beschrieben. Hierunter fallen beispielsweise elektrochrome Verglasungen, die eine optisch aktive Schicht aus einem elektrochromen Material enthalten, welches in der Lage ist, reversibel Kationen ein- und auszulagern. Durch Anlegen von elektrischen Spannungen verschiedener Polaritäten kann die Ein- bzw. Auslagerung der Kationen gesteuert werden, um hierdurch die Transparenz der elektrochromen Verglasung zu beeinflussen. Lediglich beispielhaft sei auf die europäischen Patente EP 0338876, EP 0408427, EP 0628849 und das US-Patent 5,985,486 verwiesen, in denen elektrochrome Verglasungen eingehend beschrieben sind.

Gattungsgemäße optisch aktive Verglasungen sind beispielsweise auch PDLC-Verglasungen (PDLC = Polymer Dispersed Liquid Crystal), die als optisch aktive Schicht eine Flüssigkristallschicht enthalten. Die Flüssigkristalle der Flüssigkristallschicht, die ohne angelegte elektrische Spannung willkürlich orientiert sind und in diesem Zustand Licht stark streuen, können durch Anlegen einer elektrischen Spannung in einer Richtung orientiert werden, wobei die Flüssigkristalle in diesem Zustand aufgrund eines an die Umgebung angepassten Brechungsindex Licht nur geringfügig streuen, so dass die Transparenz der Flüssigkristallschicht stark ansteigt.

Gattungsgemäße optisch aktive Verglasungen sind beispielsweise auch SPD-Verglasungen (SPD = Suspended Particles Device), die als optisch aktive Schicht eine Schicht suspendierter Partikel enthalten, wobei im Unterschied zu den PDLC-Verglasungen nicht die Lichtstreuung sondern die Lichtabsorption der optisch aktiven Schicht durch Anlegen einer elektrischen Spannung veränderbar ist, um hierdurch die Transparenz der SPD-Verglasung zu steuern.

Den gattungsgemäßen optisch aktiven Verglasungen ist gemeinsam, dass sie irreversibel zerstört werden, falls eine elektrische Spannung anliegt, die eine vom jeweiligen Typ abhängige Grenzspannung übersteigt. Wird beispielsweise an eine elektrochrome Verglasung eine die Grenzspannung übersteigende Spannung angelegt, so können sich Gase in der Verglasung bilden, Dielektrika zerstört und die optisch aktiven Schichten oxidiert, reduziert und zersetzt werden. Abgesehen von einer Schädigung der Verglasung kann eine damit einher gehende funktionelle Beeinträchtigung auch in sicherheitstechnischer Hinsicht relevant sein, beispielsweise im Falle einer unerwünschten Überhitzung von Innenräumen aufgrund einer erhöhten Transparenz der Verglasung.

Eine mögliche Ursache für das Anlegen unzulässig hoher elektrischer Spannungen ist eine Fehlbedienung durch den Nutzer. So kann beispielsweise in der Praxis nicht ausgeschlossen werden, dass eine optisch aktive Verglasung aus Unkenntnis oder Unachtsamkeit an eine elektrische Leistungsquelle mit einer zu hohen Ausgangsspannung angeschlossen wird. Zudem haben beispielsweise elektrochrome Verglasungen hinsichtlich der Polarität der angelegten Spannung eine vom jeweiligen Aufbau abhängende spezifische Anschlussbelegung, so dass elektrochrome Verglasungen in geeigneter Polung angeschlossen werden müssen. Da die Grenzspannung zum Vermindern der Transparenz in der Regel höher ist als zum Erhöhen der Transparenz, kann insbesondere der Fall eintreten, dass durch eine falsche gepolte Leistungsquelle eine irreversible Schädigung der Verglasung bewirkt wird.

Weiterhin kann nicht ausgeschlossen werden, dass elektrische Leistungsquellen aufgrund von Funktionsstörungen unzulässig hohe elektrische Spannungen abgeben.

Eine weitere häufige Ursache für unzulässig hohe Spannungen in der elektrischen Versorgung der optisch aktiven Verglasung sind Spannungsspitzen, wie sie beispielsweise in Fahrzeugen durch das Betätigen einer Zündanlage oder allgemein bei Gewittern auftreten können. Ist beispielsweise in einem Gebäude eine optisch aktive Verglasung an das elektrische Netz angeschlossen, können durch Blitzeinschlag Spannungsspitzen erzeugt werden, durch die die Verglasung irreversibel beschädigt wird.

Um dies zu vermeiden, ist es bekannt, innerhalb des elektrischen Netzes in Gebäuden oder im Bordnetz von Fahrzeugen einen Überspannungsschutz vorzusehen, so dass die optisch aktive Verglasung vor Spannungsspitzen des Netzes geschützt ist. US 2005/0063036 A1 offenbart einen Überspannungsschutz im Stromkreis der elektrischen Versorgungseinheit. Jedoch hat sich in der Praxis gezeigt, dass auch im Stromkreis zwischen dem Netzanschluss und der optisch aktiven Verglasung Spannungsspitzen durch hochfrequente elektromagnetische Wechselfelder, wie sie beispielsweise durch Betätigen der Zündanlage oder bei Gewittern auftreten können, induktiv erzeugt werden. In diesem Fall ist ein Überspannungsschutz des elektrischen Netzes unwirksam.

Um induktiv erzeugte Spannungsspitzen im Stromkreis der elektrischen Versorgung der optisch aktiven Verglasung zu vermeiden, wäre denkbar, den Netzanschluss so nah als möglich an der Verglasung anzuordnen bzw. die elektrischen Leitungen zwischen dem Netzanschluss und der Verglasung möglichst kurz zu halten. Oftmals ist eine solche Vorgehensweise jedoch nicht möglich, da der Netzanschluss in der Regel sperrig ist oder die benötigten elektrischen Leistungen am Ort der Verglasung, wie etwa an einer Fassade oder einem anderen nicht vor Feuchtigkeit geschützten Bereich, aus sicherheitstechnischen Gründen nicht zulässig sind. Denkbar wäre auch, die elektrischen Leitungen zwischen Netzanschluss und Verglasung mit einer metallischen Abschirmung zu versehen, jedoch zeigt die Praxis, dass die Wirksamkeit derartiger Abschirmungen den praktischen Anforderungen in der Regel nicht genügt.

Demgegenüber besteht die Aufgabe der vorliegenden Erfindung darin, eine Möglichkeit zu schaffen, durch die eine Schädigung optisch aktiver Verglasungen aufgrund einer unzulässig hohen Spannung zuverlässig und sicher vermieden werden kann.

Diese und weitere Aufgaben werden nach dem Vorschlag der Erfindung durch einen Aufbau mit den Merkmalen des unabhängigen Patentanspruchs gelöst. Vorteilhafte Ausgestaltungen der Erfindung sind durch die Merkmale der Unteransprüche angegeben.

Erfindungsgemäß ist ein Aufbau gezeigt, der gattungsgemäß wenigstens eine optisch aktive Verglasung umfasst, bei der wenigstens eine optische Eigenschaft, wie Transparenz, Lichtstreuung, Lichtreflexion und/oder Färbung, durch Zuführen elektrischer Leistung, d. h. durch Anlegen einer elektrischen Spannung oder eines elektrischen Stroms, veränderbar ist.

Als optisch aktive Verglasung im Sinne vorliegender Erfindung wird generell jede Verglasung verstanden, bei der wenigstens eine optische Eigenschaft durch Zuführen elektrischer Leistung steuerbar ist, beispielsweise eine elektrochrome Verglasung, eine PDLC-Verglasung oder eine SPD-Verglasung. Vorzugsweise handelt es sich bei der optisch aktiven Verglasung um eine elektrochrome Verglasung, deren Transparenz durch Zuführen elektrischer Leistung veränderbar ist. Wie insbesondere aus den eingangs genannten Druckschriften hervorgeht, umfassen elektrochrome Verglasungen wenigstens ein transparentes Substrat, beispielsweise Glas, auf dem eine Schicht aus einem elektrisch leitfähigen Material aufgebracht ist, sowie mindestens eine Schicht aus einem elektrochromen Material, beispielsweise Wolframoxid, das in der Lage ist, reversibel Kationen ein- bzw. auszulagern. Wesentlich hierbei ist, dass verschiedene Oxidationszustände des elektrochromen Materials, die dem ein- bzw. ausgelagerten Zustand der Kationen entsprechen, eine unterschiedliche Färbung haben, wobei einer dieser Zustände gewöhnlich transparent ist. Durch Anlegen von elektrischen Spannungen verschiedener Polaritäten kann die Ein- bzw. Auslagerung von Kationen gesteuert werden, um hierdurch eine optische Transparenz der elektrochromen Verglasung gezielt zu beeinflussen.

Durch den Begriff "Verglasung" wird im Sinne vorliegender Erfindung lediglich der Gegenstand als solcher gekennzeichnet, ohne hierdurch die Beschaffenheit auf Glas für die Verwendung als transparentes Substrat einzuschränken.

Der gattungsgemäße Aufbau umfasst weiterhin eine elektrische Leistungsquelle (Spannungs- und/oder Stromquelle), die über einen Stromkreis, der ein an die Leistungsquelle angeschlossenes erstes Leitungspaar aufweist, mit der optisch aktiven Verglasung elektrisch leitend verbindbar ist.

Weiterhin umfasst der erfindungsgemäße Aufbau eine im Stromkreis angeordnete Schaltungsanordnung, welche derart ausgebildet ist, dass sie unterhalb einer vorbestimmten (wählbaren) elektrischen Grenzspannung die Leistungsquelle und die Verglasung elektrisch leitend miteinander verbindet und bei Erreichen der Grenzspannung die Leistungsquelle von der Verglasung elektrisch trennt. Als Grenzspannung im Sinne vorliegender Erfindung ist, je nach Ausgestaltung der optisch aktiven Verglasung, eine für den störungsfreien Betrieb der optisch aktiven Verglasung maximal zugelassene Betriebsspannung zu verstehen.

Durch den erfindungsgemäßen Aufbau kann somit in vorteilhafter Weise verhindert werden, dass an der optisch aktiven Verglasung eine unzulässig hohe elektrische Spannung anliegt, so dass eine Beschädigung der Verglasung zuverlässig und sicher vermieden wird. Insbesondere kann verhindert werden, dass im Stromkreis zwischen der Leistungsquelle und der optisch aktiven Verglasung durch transiente elektromagnetische Wechselfelder induktiv erzeugte Spannungsspitzen die optische aktive Verglasung beaufschlagen.

Bei einer vorteilhaften Ausführungsform des erfindungsgemäßen Aufbaus ist die Schaltungsanordnung innerhalb des Stromkreises näher zur Verglasung als zur Leistungsquelle angeordnet. Je näher die Schaltungsanordnung zur Verglasung angeordnet ist, desto geringer ist die Wahrscheinlichkeit für induktive erzeugte Spannungsspitzen im Stromkreis zwischen Leistungsquelle und Verglasung. In besonders vorteilhafter Weise ist die Schaltungsanordnung in unmittelbarer Nähe bzw. Nachbarschaft zur Verglasung angeordnet. Die Schaltungsanordnung kann zu diesem Zweck beispielsweise auf einer Außenfläche der Verglasung oder im Falle einer Verbund-Schichtstruktur zwischen den Schichten der Verglasung angeordnet sein.

Bei einer weiteren vorteilhaften Ausführungsform des erfindungsgemäßen Aufbaus umfasst der Stromkreis einen, mit einem Gehäuse versehenen, elektrischen Verteiler, der das an die Leistungsquelle angeschlossene erste Leitungspaar mit wenigstens einem an die Verglasung angeschlossenen zweiten Leitungs- oder Kontaktpaar elektrisch leitend verbindet. Hierbei ist die Schaltungsanordnung in das Gehäuse des Verteilers integriert, wodurch erreicht werden kann, dass die Schaltungsanordnung nahe zur Verglasung angeordnet ist, um induktiv erzeugte Spannungsspitzen im Stromkreis zwischen der Leistungsquelle und der Verglasung zu verhindern. Andererseits kann die Schaltungsanordnung in konstruktiv besonders einfacher Weise in den die Leistungsquelle und die Verglasung verbindenden Stromkreis eingefügt werden.

Alternativ hierzu ist es beispielsweise auch möglich, die Schaltungsanordnung modulartig auszubilden und die Schaltungsanordnung an Eingangsanschlüsse des Verteilers anzuschließen, wobei die Schaltungsanordnung in diesem Fall das an die Leistungsquelle angeschlossene erste Leitungspaar mit dem Verteiler verbindet. Beispielsweise könnte die Schaltungsanordnung zu diesem Zweck auf die Eingangsanschlüsse des elektrischen Verteilers aufgesteckt werden, so dass eine herkömmliche optisch aktive Verglasung in einfacher Weise mit einer solchen Schaltungsanordnung nachgerüstet werden kann.

Bei einer weiteren vorteilhaften Ausführungsform des erfindungsgemäßen Aufbaus umfasst die Schaltungsanordnung eine erste Kurzschlussbrücke, durch welche die beiden Leitungen des an die Leistungsquelle angeschlossenen ersten Leitungspaars elektrisch leitend miteinander verbindbar sind. Die erste Kurzschlussbrücke weist wenigstens eine erste elektrische Komponente auf, durch welche die erste Kurzschlussbrücke in zwei Brückenabschnitte unterteilt wird. Hierbei ist die erste elektrische Komponente so ausgebildet, dass sie die beiden Brückenabschnitte unterhalb der Grenzspannung elektrisch trennt und bei Erreichen der Grenzspannung elektrisch leitend miteinander verbindet.

Bei einer vorteilhaften Ausgestaltung obiger Ausführungsform der Erfindung enthält die erste elektrische Komponente eine Funkenstrecke, d. h. einen Entladungsraum zwischen zwei Elektroden, wobei die Funkenstrecke so ausgebildet ist, dass sie bei Erreichen der Grenzspannung leitet, d. h. die beiden Elektroden über den Entladungsraum hinweg elektrisch leitend miteinander verbindet.

Bei einer weiteren vorteilhaften Ausgestaltung obiger Ausführungsform der Erfindung enthält die erste elektrische Komponente wenigstens ein Paar antiparallel verschalteter Dioden (Zweirichtungsdiode bzw. Diac), deren Durchbruchsspannungen so gewählt sind, dass sie bei Erreichen der Grenzspannung elektrisch leitend werden.

Bei einer weiteren vorteilhaften Ausgestaltung obiger Ausführungsform der Erfindung enthält die erste elektrische Komponente wenigstens ein Paar antiseriell verschalteter Zener-Dioden, deren Durchbruchsspannungen so gewählt sind, dass sie bei Erreichen der Grenzspannung elektrisch leitend werden.

Bei einer weiteren vorteilhaften Ausgestaltung obiger Ausführungsform der Erfindung enthält die erste elektrische Komponente wenigstens einen Transistor, beispielsweise einen Bipolartransistor oder einen über Feldeffekt steuerbaren Transistor, dessen Steueranschluss über eine zweite elektrische Komponente mit wenigstens einer der beiden Leitungen des an die Leistungsquelle angeschlossenen ersten Leitungspaars verbunden ist. Hierbei ist die zweite elektrische Komponente so ausgebildet, dass dem Steueranschluss bei Erreichen der Grenzspannung eine Steuerspannung anliegt, durch die der Transistor auf Durchlass geschaltet wird.

Beispielsweise ist der Steueranschluss des Transistors zu diesem Zweck mit einem Abgriff eines Spannungsteilers (z. B. Reihenschaltung Ohm'scher Widerstände) elektrisch leitend verbunden, wobei der Spannungsteiler in einer ersten Brückenleitung, durch welche die beiden Leitungen des an die Leistungsquelle angeschlossenen ersten Leitungspaars miteinander verbunden sind, angeordnet ist. Der Spannungsteiler ist so ausgebildet, dass bei Erreichen der Grenzspannung eine Spannung abgegriffen wird, durch die der Transistor auf Durchlass geschaltet wird.

Alternativ kann die zweite elektrische Komponente wenigstens eine Diode oder eine Reihenschaltung mehrerer Dioden) umfassen, wobei eine Durchlassspannung der Diode so gewählt ist, dass der Transistor bei Erreichen der Grenzspannung auf Durchlass geschaltet wird.

Bei obigen Ausführungsformen der Erfindung kann es weiterhin von Vorteil sein, wenn der Stromkreis zwischen der Leistungsquelle und der Verglasung, insbesondere die Schaltungsanordnung, mit einer Stromsicherung versehen ist, durch die der Stromkreis zwischen Leistungsquelle und Verglasung bei Erreichen einer vorbestimmten (wählbaren) Schwellstromstärke unterbrochen wird. Durch diese Maßnahme kann in vorteilhafter Weise erreicht werden, dass bei einer Schädigung bzw. Ausfall der ersten elektrischen Komponente ein Strom im Stromkreis zwischen der Leistungsquelle und der Verglasung unterbrochen wird. Denkbar wäre auch, alternativ oder zusätzlich einen Vorschaltwiderstand zur Strombegrenzung in den Stromkreis zwischen der Leistungsquelle und der optisch aktiven Verglasung einzufügen.

Bei einer weiteren vorteilhaften Ausführungsform des erfindungsgemäßen Aufbaus weist die Schaltungsanordnung ein durch einen Aktuator betätigtes Relais auf, das so angeordnet ist, dass der Stromkreis zwischen der Leistungsquelle und der Verglasung unterbrechbar ist. Hierbei ist der Aktuator zur Betätigung des Relais in einer zweiten Brückenleitung angeordnet, welche die beiden Leitungen des an die Leistungsquelle angeschlossenen ersten Leitungspaars elektrisch verbindet. Der Aktuator ist so ausgebildet, dass er unterhalb der Grenzspannung das Relais schließt und bei Erreichen der Grenzspannung das Relais öffnet.

Bei einer vorteilhaften Ausgestaltung obiger Ausführungsform der Erfindung ist die Schaltungsanordnung mit einer zum Aktuator parallel geschalteten, zweiten Kurzschlussbrücke versehen, durch die die beiden Leitungen des an die Leistungsquelle angeschlossenen ersten Leitungspaars elektrisch leitend verbindbar sind. Hierbei weist die zweite Kurzschlussbrücke wenigstens eine dritte elektrische Komponente auf, durch die die Kurzschlussbrücke in zwei Brückenabschnitte unterteilt wird, wobei die dritte elektrische Komponente so ausgebildet ist, dass sie die beiden Brückenabschnitte unterhalb einer vorbestimmten (wählbaren) Schwellspannung elektrisch trennt und bei Erreichen der Schwellspannung elektrisch leitend miteinander verbindet. Als dritte elektrische Komponente kann beispielsweise wenigstens ein Paar antiparallel verschalteter Dioden, deren Durchbruchsspannungen so gewählt sind, dass sie bei Erreichen der Schwellspannung elektrisch leitend werden, oder wenigstens ein Paar antiseriell verschalteter Zener-Dioden, deren Durchbruchsspannungen so gewählt sind, dass sie bei Erreichen der Schwellspannung elektrisch leitend werden, eingesetzt werden.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische Darstellung eines Ausführungsbeispiels für den erfindungsgemäßen Aufbau mit einer Schaltungsanordnung;
- Fig. 2: ein schematisches Schaltbild des Aufbaus von Fig. 1 mit einer Ausgestaltung der Schaltungsanordnung;
- Fig. 3: ein schematisches Schaltbild des Aufbaus von Fig. 1 mit einer weiteren Ausgestaltung der Schaltungsanordnung;
- Fig. 4: ein schematisches Schaltbild des Aufbaus von Fig. 1 mit einer weiteren Ausgestaltung der Schaltungsanordnung;
- Fig. 5: ein schematisches Schaltbild des Aufbaus von Fig. 1 mit einer weiteren Ausgestaltung der Schaltungsanordnung;
- Fig. 6: ein schematisches Schaltbild des Aufbaus von Fig. 1 mit einer weiteren Ausgestaltung der Schaltungsanordnung;
- Fig. 7: ein schematisches Schaltbild des Aufbaus von Fig. 1 mit einer weiteren Ausgestaltung der Schaltungsanordnung.

### Ausführliche Beschreibung der Zeichnungen

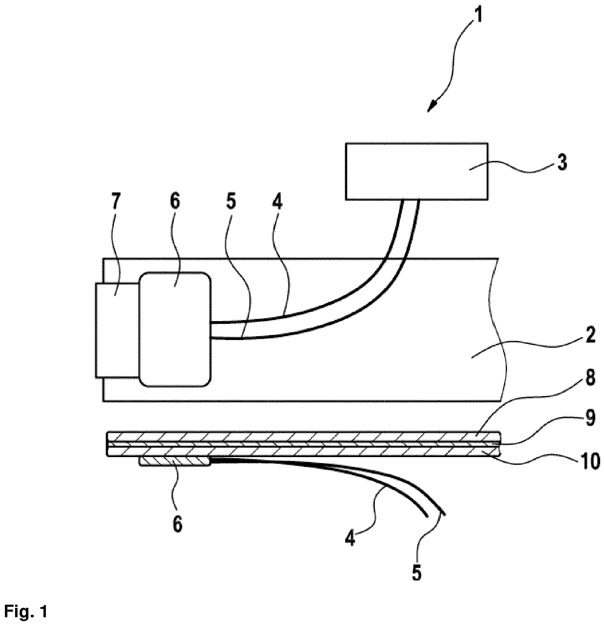

In Fig. 1 ist in einer Aufsicht und einer Schnittdarstellung ein insgesamt mit der Bezugszahl 1 bezeichneter Aufbau mit einer optisch aktiven Verglasung 2 veranschaulicht. Bei der optisch aktiven Verglasung handelt es sich hier beispielsweise um eine elektrochrome Verglasung, deren (optische) Transparenz durch Zuführen elektrischer Leistung veränderbar ist.

Die optisch aktive Verglasung 2 weist eine Verbund-Schichtstruktur auf, mit einem transparenten (z. B. gläsernen) ersten Substrat 8 und einem transparenten (z. B. gläsernen) zweiten Substrat 10, auf denen jeweils eine elektrisch leitfähige Schicht aufgebracht ist. Zwischen den beiden Substraten 8, 10 ist eine insgesamt mit der Bezugszahl 9 bezeichnete Schichtenfolge mit einer Mehrzahl Schichten angeordnet. Die Schichtenfolge 9 umfasst zumindest eine optisch aktive Schicht aus beispielsweise Wolframoxid, eine ionenleitfähige Schicht, beispielsweise eine Polymerschicht oder eine anorganische Schicht (z. B. eine keramische Schicht aus Siliziumoxid, Tantaloxid oder Hafniumoxid), sowie als Gegenelektrode beispielsweise eine Schicht aus Nickeloxid, Iridiumoxid oder Vanadiumoxid. Die verschiedenen Schichten der Schichtenfolge 9 der optisch aktiven Verglasung 2 sind dem Fachmann an sich wohlbekannt, beispielsweise aus den eingangs genannten Druckschriften, so dass hier nicht näher darauf eingegangen werden muss. In Fig. 1 sind die verschiedenen Schichten der Schichtenfolge 9 nicht näher dargestellt.

Der Aufbau 1 umfasst weiterhin eine elektrische Leistungsquelle 3, die über einen Stromkreis mit der optisch aktiven Verglasung 2 elektrisch verbindbar ist, um die Verglasung 2 mit elektrischer Leistung (Gleichstrom und/oder Gleichspannung) zu versorgen. Der Stromkreis enthält ein an die Leistungsquelle 3 angeschlossenes Leitungspaar mit einer ersten elektrischen Leitung 4 und einer zweiten elektrischen Leitung 5, die in einem elektrischen Verteiler 6 an einen Flachstecker 7 angeschlossen sind. Der Flachstecker 7 kontaktiert die auf die beiden Substrate 8, 10 aufgebrachten, elektrisch leitfähigen Schichten der optisch aktiven Verglasung 2.

Der elektrische Verteiler 6 ist als Verteilerbox mit einem Gehäuse versehen, das beispielsweise aus einem plastischen Material gefertigt ist. Der Verteiler 6 liegt einer Auβenfläche des zweiten Substrats 10 an und ist beispielsweise auf die Außenfläche geklebt. Innerhalb des Gehäuses des elektrischen Verteilers 6 ist eine Schaltungsanordnung 11 innerhalb des die Leistungsquelle 3 mit der optisch aktiven Verglasung 2 verbindenden Stromkreises integriert, was in Fig. 1 nicht erkennbar ist. Die Schaltungsanordnung 11 befindet sich somit in unmittelbarer Nähe zur optisch aktiven Verglasung 2.

Die optisch aktive Verglasung 2 kann lediglich bis zu einer maximalen Grenzspannung beaufschlagt werden, ohne dass eine Schädigung verursacht wird. Die Schaltungsanordnung 11 ist zu diesem Zweck so ausgebildet, dass sie unterhalb dieser Grenzspannung die Leistungsquelle 3 und die optisch aktive Verglasung 2 elektrisch leitend miteinander verbindet und bei Erreichen dieser Grenzspannung die Leistungsquelle 3 von der optisch aktiven Verglasung 2 elektrisch trennt.

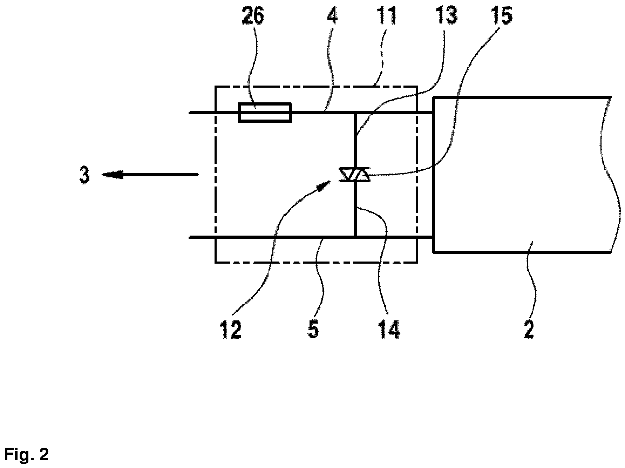

Unter Bezugnahme auf die Figuren 2 bis 7 werden nun verschiedene Ausgestaltungen der Schaltungsanordnung 11 anhand schematischer Schaltbilder für den Aufbau von Fig. 1 erläutert. In den Figuren 2 bis 7 ist jeweils die elektrische Verbindung der verschiedenen Schaltungsanordnungen 11 mit der optisch aktiven Verglasung 2 veranschaulicht. Der in den Figuren 2 bis 7 nach links gerichtete Pfeil symbolisiert die elektrische Verbindung mit der Leistungsquelle 3. Die Schaltungsanordnung 11 als solche ist jeweils anhand einer Umrandung kenntlich gemacht.

In den Figuren 2 bis 5 sind jeweils Ausgestaltungen der Schaltungsanordnung 11 gezeigt, bei denen die Schaltungsanordnung 11 eine erste Kurzschlussbrücke 12 umfasst, durch welche die an die Leistungsquelle 3 angeschlossenen Leitungen 4, 5 elektrisch leitend verbindbar sind. Die erste Kurzschlussbrücke 12 enthält jeweils eine erste elektrische Komponente, durch die sie in einen ersten Brückenabschnitt 13 und einen zweiten Brückenabschnitt 14 unterteilt wird. Hierbei ist die erste elektrische Komponente so ausgebildet ist, dass sie die beiden Brückenabschnitte 13, 14 unterhalb der Grenzspannung elektrisch trennt und bei Erreichen der Grenzspannung elektrisch leitend miteinander verbindet.

Sei zunächst Fig. 2 betrachtet, worin eine erste Ausgestaltung der Schaltungsanordnung 11 veranschaulicht ist. Demnach ist in der ersten Kurzschlussbrücke 12 als erste elektrische Komponente ein erster Diac 15, d.h. ein Paar antiparallel verschalteter Dioden, enthalten. Die Durchbruchsspannungen der beiden Dioden des ersten Diac 15 sind hierbei so gewählt, dass sie bei Erreichen der Grenzspannung der optisch aktiven Verglasung 2 elektrisch leitend werden, so dass die beiden Brückenabschnitte 13, 14 und somit die an die Leistungsquelle 3 angeschlossenen Leitungen 4, 5 kurzgeschlossen werden. Alternativ hierzu wäre es gleichermaßen möglich, als erste elektrische Komponente ein Paar antiseriell verschalteter Zener-Dioden vorzusehen, deren Durchbruchsspannungen so gewählt sind, dass sie bei Erreichen der Grenzspannung elektrisch leitend werden.

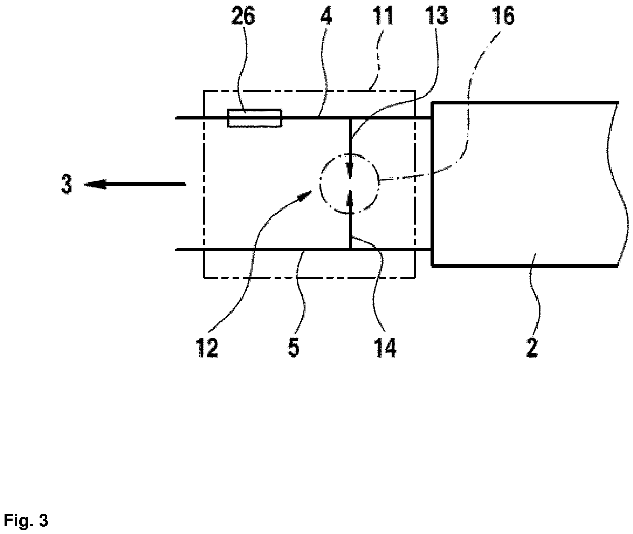

In Fig. 3 ist eine zweite Ausgestaltung der Schaltungsanordnung 11 veranschaulicht. Demnach ist in der ersten Kurzschlussbrücke 12 als erste elektrische Komponente eine Funkenstrecke 16 enthalten. Die Durchbruchsspannung der Funkenstrecke 16 ist hierbei so gewählt, dass bei Erreichen der Grenzspannung der optisch aktiven Verglasung 2 die beiden Brückenabschnitte 13, 14 und somit die an die Leistungsquelle 3 angeschlossenen Leitungen 4, 5 über die Funkenstrecke 16 kurzgeschlossen werden.

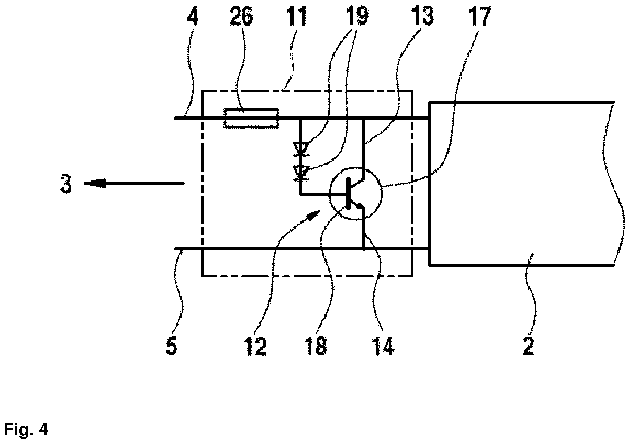

Die in den Figuren 3 und 4 gezeigten ersten und zweiten Ausgestaltungen der Schaltungsanordnung 11 eignen sich vor allem für optisch aktive Verglasungen 2 mit einer relativ hohen Betriebsspannung, die beispielsweise mehr als 100 V beträgt, so dass deren Grenzspannung oberhalb 100 V liegt und beispielsweise mehrere Hundert Volt betragen kann.

In Fig. 4 ist eine dritte Ausgestaltung der Schaltungsanordnung 11 veranschaulicht. Demnach ist in der ersten Kurzschlussbrücke 12 als erste elektrische Komponente ein Bipolartransistor 17 (npn- oder pnp-Transistor) enthalten, wobei der Lastpfad des Bipolartransistors 17 Teil der Kurzschlussbrücke 12 ist. Ein Steueranschluss 18 des Bipolartransistors 17 ist über zwei seriell miteinander verschaltete Dioden 19 mit der ersten Leitung 4 elektrisch leitend verbunden. Die beiden Dioden 19 haben eine solche Durchlassspannung, dass am Steueranschluss 18 des Bipolartransistors 17 bei Erreichen der Grenzspannung der Lastpfad des Bipolartransistors 17 auf Durchlass geschaltet wird, so dass die beiden Brückenabschnitte 13, 14 und somit die an die Leistungsquelle 3 angeschlossenen, elektrischen Leitungen 4, 5 kurzgeschlossen werden.

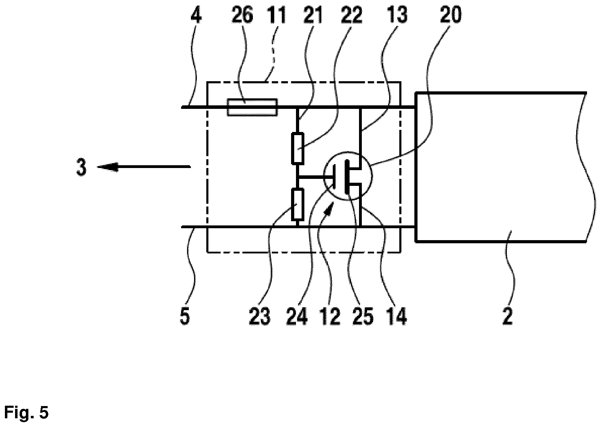

In Fig. 5 ist eine vierte Ausgestaltung der Schaltungsanordnung 11 veranschaulicht. Demnach ist in der ersten Kurzschlussbrücke 12 als erste elektrische Komponente ein Feldeffekttransistor 20 enthalten, wobei der Lastpfad des Feldeffekttransistors 20 Teil der Kurzschlussbrücke 12 ist. Ein Steueranschluss 25 des Feldeffekttransistors 20 ist mit einem Abgriff 24 zum Abgreifen einer Spannung zwischen zwei in Reihe miteinander verschalteten elektrischen Widerständen 22, 23 elektrisch leitend verbunden. Die Reihenschaltung der beiden elektrischen Widerstände 22, 23 ist in einer die beiden elektrischen Leitungen 4, 5 elektrisch miteinander verbindenden ersten Brückenleitung 21 enthalten. Die beiden elektrischen Widerstände 22, 23 sind so gewählt, dass bei Erreichen der Grenzspannung eine Spannung am Abgriff 24 anliegt, durch die der Lastpfad des Feldeffekttransistors 20 auf Durchlass geschaltet wird, so dass die beiden Brückenabschnitte 13, 14 und somit die beiden elektrischen Leitungen 4, 5 kurzgeschlossen werden.

In den in den Figuren 2 bis 5 veranschaulichten Ausgestaltungen der Schaltungsanordnung 11 ist innerhalb der Schaltungsanordnung 11 in der an die Leistungsquelle 3 angeschlossenen, ersten Leitung 4 jeweils eine Stromsicherung 26 (beispielsweise eine Schmelzsicherung) angeordnet, durch die der Stromkreis zwischen der Leistungsquelle 3 und der optisch aktiven Verglasung 2 bei Erreichen einer vorbestimmten (wählbaren) Schwellstromstärke unterbrochen wird, so dass die optisch aktive Verglasung 2 bei einer Schädigung bzw. Ausfall der ersten elektrischen Komponente geschützt ist. Die Stromsicherung 26 könnte gleichermaßen außerhalb der Schaltungsanordnung 11 innerhalb des die Leistungsquelle 3 mit der optisch aktiven Verglasung 2 verbindenden Stromkreises angeordnet sein. Denkbar wäre auch, alternativ oder zusätzlich einen Vorschaltwiderstand zur Strombegrenzung im Stromkreis zwischen der Leistungsquelle 3 und der optisch aktiven Verglasung 2 vorzusehen.

Die in den Figuren 4 und 5 gezeigten dritten und vierten Ausgestaltungen der Schaltungsanordnung 11 eignen sich vor allem für optisch aktive Verglasungen 2 mit einer relativ geringen Betriebsspannung, die beispielsweise maximal einige Volt beträgt, so dass deren Grenzspannung in entsprechender Weise im Bereich einiger Volt liegen kann.

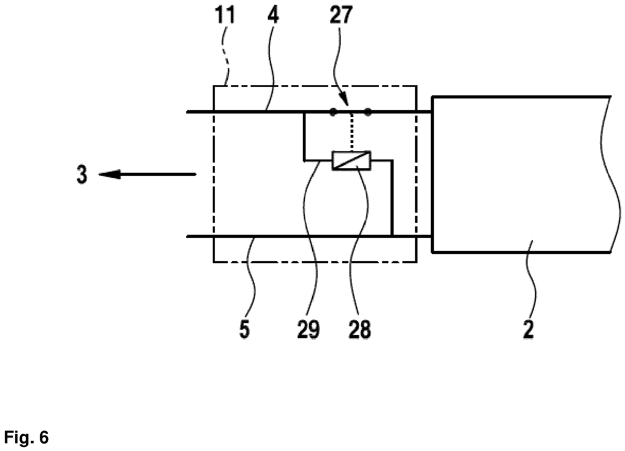

In Fig. 6 ist eine Ausgestaltung der Schaltungsanordnung 11 gezeigt, bei welcher der Stromkreis zwischen der Leistungsquelle 3 und der optisch aktiven Verglasung 2 bei Erreichen der Grenzspannung der optisch aktiven Verglasung 2 unterbrochen wird. Zu diesem Zweck ist in der an die Leistungsquelle 3 angeschlossenen, ersten Leitung 4 ein Relais 27 angeordnet, das durch einen Aktuator 28 betätigt ist. Der Aktuator 28 ist in einer zweiten Brückenleitung 29 angeordnet, welche die beiden Leitungen 4, 5 des an die Leistungsquelle 3 angeschlossenen Leitungspaars elektrisch leitend miteinander verbindet. Der Aktuator 28 ist so ausgebildet, dass er unterhalb der Grenzspannung das Relais 27 schließt und bei Erreichen der Grenzspannung das Relais 27 öffnet.

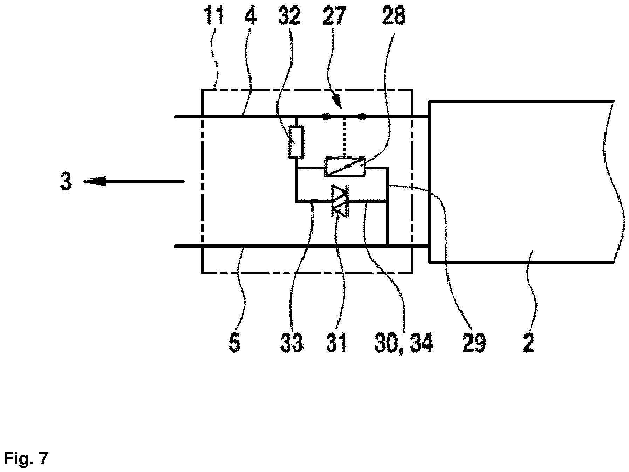

In Fig. 7 ist eine Variante zur Schaltungsanordnung 11 von Fig. 6 veranschaulicht. Hierbei ist zusätzlich ein dritter Widerstand 32 und eine zum Aktuator 28 parallel geschaltete, zweite Kurzschlussbrücke 30 angeordnet, durch die die beiden Leitungen 4, 5 des an die Leistungsquelle 3 angeschlossenen Leitungspaars elektrisch leitend miteinander verbindbar sind. Die zweite Kurzschlussbrücke 30 weist als dritte elektrische Komponente einen die zweite Kurzschlussbrücke 30 in einen dritten Brückenabschnitt 33 und einen vierten Brückenabschnitt 34 unterteilenden zweiten Diac 31 auf. Die Durchbruchsspannungen der beiden Dioden des zweiten Diac 31 sind hierbei so gewählt, dass die beiden Dioden des zweiten Diacs 31 bei Erreichen einer vorbestimmten (wählbaren) Schwellspannung elektrisch leitend werden, so dass die beiden Brückenabschnitte 33, 34 und somit die an die Leistungsquelle 3 angeschlossenen Leitungen 4, 5 kurzgeschlossen werden. Alternativ hierzu wäre es gleichermaßen möglich, als dritte elektrische Komponente ein Paar antiseriell verschalteter Zener-Dioden vorzusehen, deren Durchbruchsspannungen und der dritte Widerstand 32 so gewählt sind, dass die Zener-Dioden bei Erreichen der Schwellspannung elektrisch leitend werden.

In den in den Figuren 6 und 7 gezeigten Ausgestaltungen der Schaltungsanordnung 11 ist keine Stromsicherung 26 vorgesehen, so dass der Stromkreis zwischen der Leistungsquelle 3 und der optisch aktiven Verglasung 2 bei Erreichen der Grenzspannung der optisch aktiven Verglasung 2 reversibel unterbrochen werden kann.

In der vorliegenden Erfindung sind alle obig erläuterten Ausführungsformen bzw. Ausgestaltungen miteinander kombinierbar, wodurch vorteilhafte Effekte erzielbar sind, insbesondere ein universell einsetzbarer Überspannungsschutz für eine optisch aktive Verglasung, deren Betriebsspannung wahlweise bei relativ hohen Spannungen (mehrere Hundert Volt) oder relativ niedrigen Spannungen (mehrere Volt) liegen kann.

### Bezugszeichenliste

- 1: Aufbau
- 2: optisch aktive Verglasung
- 3: Leistungsquelle
- 4: erste Leitung
- 5: zweite Leitung
- 6: Verteiler
- 7: Flachstecker
- 8: erstes Substrat
- 9: Schichtenfolge
- 10: zweites Substrat
- 11: Schaltungsanordnung
- 12: erste Kurzschlussbrücke
- 13: erster Brückenabschnitt
- 14: zweiter Brückenabschnitt
- 15: erster Diac
- 16: Funkenstrecke 17 Bipolartransistor 18 Steueranschluss 19 Diode 20 Feldeffekttransistor 21 erste Brückenleitung 22 erster Widerstand 23 zweiter Widerstand 24 Abgriff 25 Steueranschluss 26 Stromsicherung 27 Relais 28 Aktuator 29 zweite Brückenleitung 30 zweite Kurzschlussbrücke 31 zweiter Diac 32 dritter Widerstand 33 dritter Brückenabschnitt 34 vierter Brückenabschnitt

## Patentansprüche

1. Aufbau (1), welcher umfasst:
wenigstes eine optisch aktive Verglasung (2), bei der wenigstens eine optische Eigenschaft durch Zuführen elektrischer Leistung veränderbar ist, eine elektrische Leistungsquelle (3), die über einen Stromkreis (4, 5; 6; 7) mit der optisch aktiven Verglasung (2) elektrisch verbindbar ist, wobei der Stromkreis ein an die Leistungsquelle (3) angeschlossenes erstes Leitungspaar (4, 5) umfasst, **gekennzeichnet durch** eine im Stromkreis angeordnete elektrische Schaltungsanordnung (11), welche derart ausgebildet ist, dass sie unterhalb einer vorbestimmten Grenzspannung die Leistungsquelle (3) und die Verglasung (2) elektrisch verbindet und bei Erreichen der Grenzspannung die Leistungsquelle (3) von der Verglasung (2) elektrisch trennt
und die Schaltungsanordnung (11) eine erste Kurzschlussbrücke (12) umfasst, **durch** welche die beiden Leitungen (4, 5) des ersten Leitungspaars elektrisch verbindbar sind, wobei die erste Kurzschlussbrücke (12) wenigstens eine erste elektrische Komponente aufweist, **durch** die die erste Kurzschlussbrücke (12) in zwei Brückenabschnitte (13, 14) unterteilt wird, wobei die erste elektrische Komponente so ausgebildet ist, dass sie die beiden Brückenabschnitte (13, 14) unterhalb der Grenzspannung elektrisch trennt und bei Erreichen der Grenzspannung elektrisch leitend verbindet.

2. Aufbau (1) nach Anspruch 1, **dadurch gekennzeichnet, dass** die Schaltungsanordnung (11) innerhalb des Stromkreises näher zur Verglasung (2) als zur Leistungsquelle (3), insbesondere in unmittelbarer Nähe zur Verglasung (2), angeordnet ist.

3. Aufbau (1) nach Anspruch 1 oder 2, **dadurch gekennzeichnet, dass** die Schaltungsanordnung (11) auf einer Außenfläche der Verglasung (2) oder zwischen den Schichten der Verglasung (2) angeordnet ist.

4. Aufbau (1) nach einem der Ansprüche 1 bis 3, **dadurch gekennzeichnet, dass** der Stromkreis einen mit einem Gehäuse versehenen elektrischen Verteiler (6) umfasst, der das erste Leitungspaar (4, 5) mit wenigstens einem an die Verglasung angeschlossenen zweiten Leitungs- oder Kontaktpaar (7) elektrisch leitend verbindet, wobei die Schaltungsanordnung (11) in das Gehäuse des Verteilers (6) integriert ist.

5. Aufbau (1) nach einem der Ansprüche 1 bis 3, **dadurch gekennzeichnet, dass** der Stromkreis einen mit einem Gehäuse versehenen elektrischen Verteiler (6) umfasst, der das erste Leitungspaar (4, 5) mit wenigstens einem an die Verglasung angeschlossenen zweiten Leitungs- oder Kontaktpaar elektrisch leitend verbindet, wobei die Schaltungsanordnung modulartig ausgebildet und an Eingangsanschlüsse des Verteilers (6) angeschlossen ist.

6. Aufbau (1) nach einem der Ansprüche 1 bis 5, **dadurch gekennzeichnet, dass** die erste elektrische Komponente eine Funkenstrecke (16) enthält.

7. Aufbau (1) nach einem der Ansprüche 1 bis 5, **dadurch gekennzeichnet, dass** die erste elektrische Komponente wenigstens ein Paar antiparallel verschalteter Dioden (15) enthält.

8. Aufbau (1) nach einem der Ansprüche 1 bis 5, **dadurch gekennzeichnet, dass** die erste elektrische Komponente wenigstens ein Paar antiseriell verschalteter Zener-Dioden enthält.

9. Aufbau (1) nach einem der Ansprüche 1 bis 5, **dadurch gekennzeichnet, dass** die erste elektrische Komponente wenigstens einen Transistor (17; 20) enthält, dessen Steueranschluss (18; 25) über eine zweite elektrische Komponente an wenigstens eine der beiden Leitungen (4, 5) des ersten Leitungspaars angeschlossen ist, wobei die zweite elektrische Komponente so ausgebildet ist, dass dem Steueranschluss (18; 25) bei Erreichen der Grenzspannung eine Steuerspannung anliegt, durch die der Transistor (17; 20) auf Durchlass geschaltet wird.

10. Aufbau (1) nach Anspruch 9, **dadurch gekennzeichnet, dass** der Steueranschluss (25) mit einem Abgriff (24) eines Spannungsteilers (22-24) elektrisch leitend verbunden ist, wobei der Spannungsteiler in einer die beiden Leitungen (4, 5) des ersten Leitungspaars miteinander verbindenden ersten Brückenleitung (21) angeordnet und so ausgebildet ist, dass bei Erreichen der Grenzspannung eine Spannung am Abgriff (24) anliegt, durch die der Transistor (20) auf Durchlass geschaltet wird.

11. Aufbau (1) nach Anspruch 9, **dadurch gekennzeichnet, dass** die zweite elektrische Komponente wenigstens eine Diode (19) umfasst, wobei eine Durchlassspannung der Diode so gewählt ist, dass der Transistor (17) bei Erreichen der Grenzspannung auf Durchlass geschaltet wird.

12. Aufbau (1) nach einem der Ansprüche 1 bis 11, **dadurch gekennzeichnet, dass** der die Leistungsquelle (3) mit der Verglasung (2) elektrisch verbindende Stromkreis, insbesondere die Schaltungsanordnung, mit einer Stromsicherung (26) versehen ist, durch die der Stromkreis bei Erreichen einer vorbestimmten Schwellstromstärke unterbrochen wird.

13. Aufbau (1) nach einem der Ansprüche 1 bis 12, **dadurch gekennzeichnet, dass** die optisch aktive Verglasung (2) eine elektrochrome Verglasung ist, deren Transparenz durch Zuführen elektrischer Leistung veränderbar ist.
